# EUROPÄISCHE PATENTSCHRIFT

(11) **EP 2 049 380 B1**
(45) Veröffentlichungstag und Bekanntmachung des Hinweises auf die Patenterteilung: **27.06.2012**
(21) Anmeldenummer: 07784615.2
(22) Anmeldetag: 10.08.2007
(51) Int. Cl.: B61F 5/16, F16C 11/06

(54) **SPHÄRISCHE GLEITEINLAGE FÜR EIN DREHGESTELL EINES SCHIENENGEBUNDENEN FAHRZEUGS**
SPHERICAL SLIDING INSERT FOR A BOGIE OF A RAIL VEHICLE
PIÈCE INTERCALAIRE DE GLISSEMENT SPHÉRIQUE POUR UN BOGIE D'UN VÉHICULE FERROVIAIRE

(30) Priorität: 10.08.2006 AT 13442006
(43) Veröffentlichungstag der Anmeldung: 22.04.2009
(73) Patentinhaber: Sattler, Erich, 8720 Kobenz (AT); Exel, Robert, 8732 Seckau (AT)
(72) Erfinder: EXEL, Robert, 8732 Seckau (AT)
(74) Vertreter: Margotti, Herwig Franz
(86) Internationale Anmeldenummer: PCT/AT2007/000386
(87) Internationale Veröffentlichungsnummer: WO 2008/017095

(56) Entgegenhaltungen:
- CH-A5- 597 530
- DE-A1- 3 419 776

## Beschreibung

Die Erfindung betrifft eine sphärische Gleiteinlage für ein Drehgestell eines schienengebundenen Fahrzeugs, wobei eine obere Drehpfanne über die Gleiteinlage an einer unteren Drehpfanne abgestützt ist und wobei die Gleiteinlage von zwei aneinander anliegenden sphärischen und gegeneinander bewegbaren Schalen, und zwar einer Oberschale und einer Unterschale, gebildet ist.

Eine Gleiteinlage dieser Art stellt eine Verbindung vom Drehgestell zum Wagenkasten her und gestattet eine Drehbewegung bei Kurvenfahrt. Sie muss jedoch im Geradeauslauf eine gewisse Hemmung gewährleisten.

Die Gleitanlage benötigt zu diesem Zweck einen definierten Reibwert, um sowohl das Ausdrehen in der Kurve als auch eine gewisse Stabilität im geraden Schienenstrang sicherzustellen. Dieser Reibwert ist durch Eisenbahnnormen vorgegeben und wird über Ausdrehversuche mittels zu erreichender Ausdrehkräfte überprüft. Zusätzlich zum sicheren Fahrverhalten der Wagen wird dadurch auch die größtmögliche Schonung des Fahrweges (Schienen) erzielt. Diese Forderung muss außerdem in ungeschmiertem Zustand gelöst werden, unabhängig davon, ob der Wagen unbeladen ist oder sein höchstzulässiges Gesamtgewicht hat, sowie auch im Sommer- und Winterbetrieb (temperaturunabhängig). Die derzeit am häufigsten verwendeten Lösungen sind einlagige Gleiteinlagen aus thermoplastischen oder duroplastischen Kunststoffen. In den häufigsten Fällen wird diese einstückige Gleiteinlage in die untere Drehpfanne des Drehgestells eingepresst.

Nach Aufsetzen des Wagenkastens liegt die am Wagenkasten montierte obere Drehpfanne in der Gleiteinlage. Somit ergibt sich eine Gleitpaarung Stahl-Kunststoff, die die vorher beschriebenen Kriterien erfüllen muss. Hier treten nun die verschiedensten schwer beeinflussbaren Parameter auf: Der Gleitreibwert und Haftreibwert sollen so nah wie möglich beisammen liegen und nicht zu niedrig sein, um die gewünschte Drehhemmung bei schneller Geradeausfahrt zu gewährleisten, dürfen aber auch nicht zu hoch sein, damit ein Entgleisen bei Kurvenfahrt verhindert wird. Zusätzlich sollte der Verschleiß der Gleitanlage sehr gering sein, um einen Serviceintervall von zumindest 6 Jahren sicherzustellen. Da aber die Qualität der oberen Drehpfanne (neu/alt; rau/glatt; blank/rostig...) ein Problem für diese Gleitpaarung darstellt, ist der Idealzustand kaum erreichbar.

Aus der DE 34 19 776 A 1 ist eine Drehpfanne der eingangs beschriebenen Art bekannt, die zwei Metallschalen aufweist, von denen eine mit dem Drehpfannenoberteil und eine mit dem Drehpfannenunterteil durch eine Schweißnaht verbunden ist.

Aus der US 3 961 582 ist ein sphärisches Lager zur seitlichen Wagenkastenabstützung bekannt, das eine Unterschale aus Metall aufweist, die in einer Ausnehmung eines unteren Lagerträgers eingesetzt ist. Auf dieser Unterschale ruht eine Gegenschale eines oberen Lagerträgers.

Die Erfindung bezweckt die Vermeidung der oben beschriebenen Nachteile und Schwierigkeiten und stellt sich die Aufgabe, eine Gleiteinlage zu schaffen, die in bestehenden Systemen mit einlagigen Gleiteinlagen ohne bauliche Änderungen an diesen Systemen verwendbar ist und einen weitgehend konstanten Reibwert besitzt.

Diese Aufgabe wird dadurch gelöst, dass die Unterschale eine die Oberschale aufnehmende Ausnehmung aufweist, wobei die Unterschale in die untere Drehpfanne des Drehgestells eingepresst ist. Dadurch verlagert sich die Drehbewegung zwischen oberer Drehpfanne und der Gleiteinlage (gemäß Stand der Technik) zwischen die obere Gleiteinlage und die untere Gleiteinlage, wobei durch die Ausnehmung eine zuverlässige Begrenzung der sphärischen Bewegung der Oberschale gegeben ist und eine kompakte Bauweise gegeben ist, sodass ein Austausch einer einteiligen Gleiteinlage ohne bauliche Veränderungen an der oberen und unteren Drehpfanne möglich ist. Damit ist es möglich, dem gewünschten Reibwert zu entsprechen und unabhängig vom Zustand der oberen Drehpfanne eine definierte Gleitpaarung zur Verfügung zu stellen.

Bevorzugte Ausführungsformen sind in den Unteransprüchen 2 bis 7 definiert.

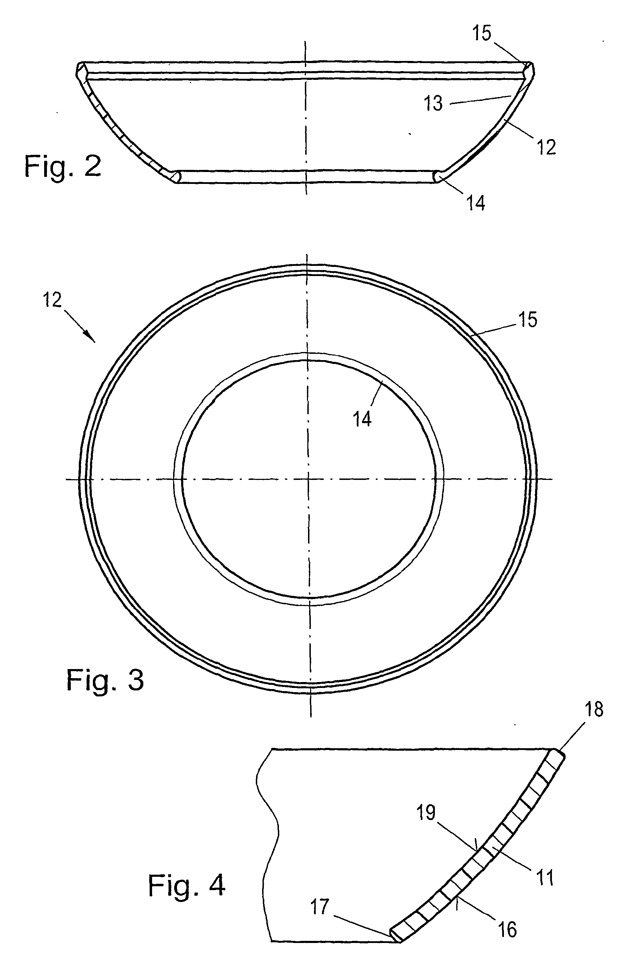

Die Erfindung ist nachfolgend anhand eines Ausführungsbeispieles näher erläutert, das in der Zeichnung dargestellt ist. Fig. 1 zeigt einen Schnitt durch ein Drehgestell eines Schienenfahrzeugs, wobei in der rechten Hälfte der Figur 1 der Stand der Technik gemäß DE 29603375U veranschaulicht ist, der vom Gegenstand von Anspruch 1 weiter entfernt liegt als die beiden oben genannten Dokumente, und in der linken Hälfte der Figur 1 die erfindungsgemäße Gleiteinlage vorgesehen ist. Fig. 2 zeigt eine Unterschale im Axialschnitt, Fig. 3 in Draufsicht. In Fig. 4 ist die Oberschale im Schnitt im vergrößerten Maßstab gezeigt.

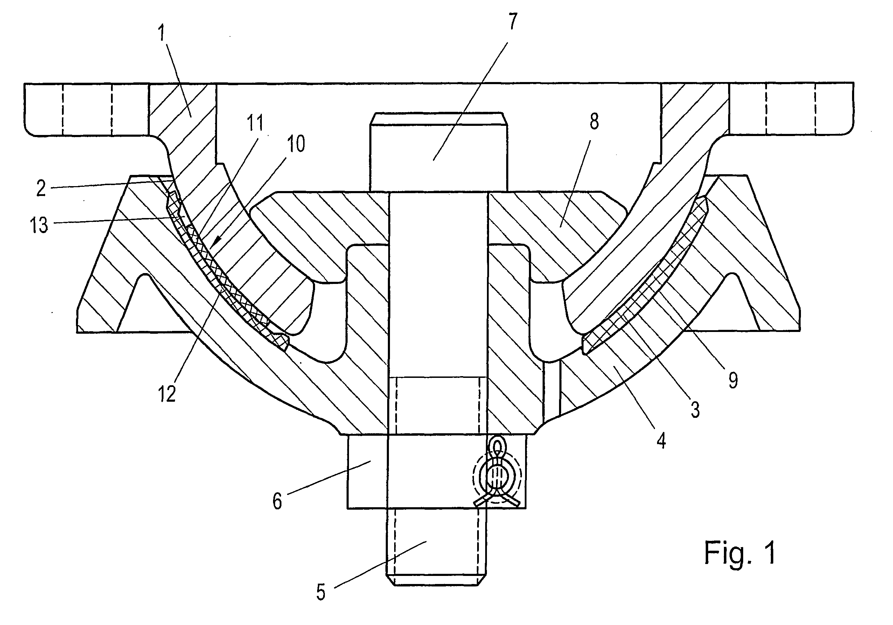

Gemäß Fig. 1 ist eine obere Drehpfanne 1 eines Drehgestells mit einer sphärischen Außenoberfläche 2 über eine sphärisch gestaltete Gleiteinlage 3 an einer unteren Drehpfanne 4 des Drehgestells abgestützt. Die beiden Drehpfannen 1 und 4 sind zur Vermeidung des Auseinanderfallens mittels eines Bolzens 5, der einerseits mittels einer gesicherten Mutter 6 die untere Drehpfanne durchragt und andererseits mittels seines Kopfes 7 über ein Zwischenstück 8 an der oberen Drehpfanne aufliegt.

Die Gleiteinlage 3 gemäß dem Stand der Technik ist einstückig ausgebildet und in eine Ausnehmung 9 der unteren Drehpfanne eingepresst.

Erfindungsgemäß ist die Gleiteinlage 10 von zwei Teilen gebildet, und zwar einer Oberschale 11 und einer Unterschale 12, wobei die Unterschale wie beim Stand der Technik in die Ausnehmung 9 der unteren Drehpfanne 4 eingepresst ist. Die Unterschale 12 weist eine die Oberschale 11 aufnehmende Ausnehmung 13 auf, welche Ausnehmung 13 durch einen inneren und äußeren Begrenzungsrand 14, 15 der Unterschale 12 begrenzt ist. Diese Ausnehmung 13 bildet eine Kugelfläche größeren Ausmaßes als die Außenfläche 16 der Oberschale 11.

Die Oberschale 11 ist an ihren Randbereichen 17, 18, d.h. am Übergang von den Randbereichen 17, 18 zur sphärischen Außenfläche 16, abgerundet ausgebildet.

Die Gesamtdicke der erfindungsgemäßen Gleiteinlagen 10 entspricht der Dicke einer Gleiteinlage 3 gemäß dem Stand der Technik, sodass ein einfacher Austausch derselben möglich ist. Dies bedeutet, dass die Unterschale 12 im Bereich der Ausnehmung 13 und die Oberschale 11 jeweils etwa nur halb so dick sind als eine Gleiteinlage 3 gemäß dem Stand der Technik.

Die erfindungsgemäßen Teile 11, 12 der Gleiteinlage sind aus thermoplastischem oder duroplastischem Material gebildet. Eine Kombination einer thermoplastischen Oberschale 11 und einer duroplastischen Unterschale 12 bzw. umgekehrt ist denkbar. Bevorzugt wegen der guten Schlagzähigkeit - die Gleitschale 10 muss Stoßbelastungen aufnehmen, die beim Anfahren, Bremsen und Rangieren auftreten - sind Polyamidtypen, wie z.B. POM-Polyacetal oder PET-Polyethylenterephtalat.

Um zu gewährleisten, dass die Drehbewegung zwischen der Oberschale 11 und der Unterschale 12 stattfindet, kann ein Klebemittel zwischen der Innenfläche 19 der Oberschale 11 und der Außenfläche 2 der oberen Drehpfanne 1 vorgesehen werden. Dies stellt jedoch eine Ausnahme dar, zumal der Reibwert zwischen oberer Drehpfanne 1 und Oberschale 11 wesentlich höher ist als der Reibwert zwischen der Oberschale 11 und der Unterschale 12.

Weiters ist es möglich, auch durch eine rauere Oberfläche der Innenfläche 19 der Oberschale 11 eine zuverlässige Haftung an der oberen Drehpfanne 1 zu erreichen. Auch kann eine zusätzliche Kunststoffschicht mit hohem Reibwert an der Innenfläche 19 der Oberschale 11 vorgesehen werden.

## Patentansprüche

1. Sphärische Gleiteinlage (10) für ein Drehgestell eines schienengebundenen Fahrzeugs, wobei eine obere Drehpfanne (1) über die Gleiteinlage (10) an einer unteren Drehpfanne (4) abgestützt ist und wobei die Gleiteinlage (10) von zwei aneinander anliegenden sphärischen und gegeneinander bewegbaren Schalen, und zwar einer Oberschale (11) und einer Unterschale (12), gebildet ist, **dadurch gekennzeichnet, dass** die Unterschale (12) eine die Oberschale (11) aufnehmende Ausnehmung (13) aufweist, wobei die Unterschale (12) in die untere Drehpfanne (4) des Drehgestells einpressbar ist.

2. Gleiteinlage nach Anspruch 1, **dadurch gekennzeichnet, dass** die Ausnehmung von einem äußeren und einem inneren Begrenzungsrand (14, 15) zur Abdichtung und zur Begrenzung der Bewegbarkeit der Oberschale (11) gegenüber der Unterschale (12) versehen ist.

3. Gleiteinlage nach einem der Ansprüche 1 oder 2, **dadurch gekennzeichnet, dass** die Oberschale (11) am Übergang von ihrer Außenfläche (16) zu ihren inneren und äußeren Randbereichen (17, 18) abgerundet ausgebildet ist.

4. Gleiteinlage nach einem der Ansprüche 1 bis 3, **dadurch gekennzeichnet, dass** die aus Oberschale (11) und Unterschale (12) zusammengesetzte Gleiteinlage (10) als Austauschteil vorgesehen ist und eine Dicke aufweist, die in etwa der Dicke einer auszutauschenden Gleiteinlage (3) entspricht.

5. Gleiteinlage nach einem der Ansprüche 1 bis 4, **dadurch gekennzeichnet, dass** sowohl die Oberschale (11) als auch die Unterschale (12) von Kunststoffmaterial, insbesondere thermoplastischem oder duroplastischem Kunststoffmaterial, gebildet sind.

6. Gleiteinlage nach Anspruch 5, **dadurch gekennzeichnet, dass** als Kunststoffmaterial POM-Polyacetal und/oder PET-Polyethylenterephtalat eingesetzt wird.

7. Gleiteinlage nach einem der Ansprüche 1 bis 6, **dadurch gekennzeichnet, dass** die Oberschale (11) eine unterschiedliche Härte gegenüber der Unterschale (12) aufweist, wobei vorzugsweise die Unterschale (11) eine größere Härte als die Oberschale (12) aufweist.

## Claims

1. A spherical sliding insert (10) for a bogie of a rail-bound vehicle, in which an upper rotating pan (1) is supported via the sliding insert (10) on a lower rotating pan (4), with the sliding insert (10) being formed by two spherical shells which rest against each other and are movable relative to each other, namely an upper shell (11) and a lower shell (12), **characterized in that** the lower shell (12) has a recess (13) which holds the upper shell (11), with the lower shell (12) being pressable into the lower rotating pan (4) of the bogie.

2. A sliding insert according to claim 1, **characterized in that** the recess is provided with an outer and an inner boundary edge (14, 15) for sealing and for restricting the movability of the upper shell (11) relative to the lower shell (12).

3. A sliding insert according to any of claims 1 or 2, **characterized in that** the upper shell (11) is designed to be rounded at the transition from its outer surface (16) to its inner and outer peripheral regions (17, 18).

4. A sliding insert according to any of claims 1 to 3, **characterized in that** the sliding insert (10) composed of the upper shell (11) and the lower shell (12) is intended to be a replacement part and has a thickness which roughly corresponds to the thickness of a sliding insert (3) to be replaced.

5. A sliding insert according to any of claims 1 to 4, **characterized in that** both the upper shell (11) and the lower shell (12) are formed from a synthetic material, in particular a thermoplastic or thermosetting material.

6. A sliding insert according to claim 5, **characterized in that** POM polyacetal and/or PET polyethylene terephthalate is/are used as the synthetic material.

7. A sliding insert according to any of claims 1 to 6, **characterized in that** the upper shell (11) has a hardness which is different from that of the lower shell (12), with the lower shell (11) preferably exhibiting a greater hardness than the upper shell (12).

## Revendications

1. Insert de coulissement sphérique (10) pour un bogie d'un véhicule ferroviaire, dans lequel une calotte de rotation supérieure (1) s'appuie sur une calotte de rotation inférieure (4) via l'insert de coulissement (10), et l'insert de coulissement (10) est formé par deux coques sphériques appliquées l'une contre l'autre et mobiles l'une par rapport à l'autre, à savoir une coque supérieure (11) et une coque inférieure (12), **caractérisé en ce que** la coque inférieure (12) comporte un évidement (13) qui reçoit la coque supérieure (11), et la coque inférieure (12) est susceptible d'être engagée à la presse dans la calotte de rotation inférieure (4) du bogie.

2. Insert de coulissement selon la revendication 1, **caractérisé en ce que** l'évidement est doté d'une bordure de limitation extérieure et d'une bordure de limitation intérieure (14, 15) pour l'étanchement et pour la limitation de la mobilité de la coque supérieure (11) par rapport à la coque inférieure (12).

3. Insert de coulissement selon l'une des revendications 1 ou 2, **caractérisé en ce que** la coque supérieure (11) est réalisée arrondie à la transition de sa surface extérieure (16) vers ses zones de bordure intérieure et extérieure (17, 18).

4. Insert de coulissement selon l'une des revendications 1 à 3, **caractérisé en ce que** l'insert de coulissement (10) composé de la coque supérieure (11) et de la coque inférieure (12) est prévu comme pièce interchangeable et présente une épaisseur qui correspond approximativement à l'épaisseur d'un insert de coulissement (3) à interchanger.

5. Insert de coulissement selon l'une des revendications 1 à 4, **caractérisé en ce que** la coque supérieure (11) tout comme la coque inférieure (12) sont formées en matière plastique, en particulier en matière thermoplastique ou thermodurcissable.

6. Insert de coulissement selon la revendication 5, caractérisé en ce la matière plastique employée est du polyacétal POM ou du polyéthylène téréphtalate PET.

7. Insert de coulissement selon l'une des revendications 1 à 6, **caractérisé en ce que** la coque supérieure (11) présente une dureté différente par rapport à la coque inférieure (12), et de préférence la coque inférieure (11) présente une plus grande dureté que la coque supérieure (12).
